(19) Europäisches Patentamt
European Patent Office
Office européen des brevets

(11) EP 2 759 213 B1

(12) **EUROPEAN PATENT SPECIFICATION**

(45) Date of publication and mention of the grant of the patent:
**18.01.2017 Bulletin 2017/03**

(21) Application number: **12834267.2**

(22) Date of filing: **31.07.2012**

(51) Int Cl.:
***A23L 13/00*** *(2016.01)* ***A23L 13/60*** *(2016.01)*
***A23L 29/20*** *(2016.01)*

(86) International application number:
**PCT/KR2012/006095**

(87) International publication number:
**WO 2013/042872 (28.03.2013 Gazette 2013/13)**

(54) **PROCESSED MEAT PRODUCT WITHOUT ADDED PHOSPHATE, AND METHOD OF PRODUCING SAME**

VERARBEITETES FLEISCHPRODUKT OHNE PHOSPHATZUSATZ UND VERFAHREN ZU SEINER HERSTELLUNG

PRODUIT DE VIANDE TRANSFORMÉ SANS PHOSPHATE AJOUTÉ, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.09.2011 KR 20110095834**

(43) Date of publication of application:
**30.07.2014 Bulletin 2014/31**

(73) Proprietor: **LOTTE Fine Chemical Co., Ltd.**
**Ulsan, 44714 (KR)**

(72) Inventors:
- **KO, Kwang Nam**
  **Seoul 142-100 (KR)**
- **LEE, Eun Jung**
  **Seoul 137-796 (KR)**
- **BAEK, Hyon Ho**
  **Incheon-Si 406-722 (KR)**
- **SONG, Min Gyu**
  **Seoul 137-765 (KR)**
- **JEON, Jyung Hee**
  **Incheon-Si 406-755 (KR)**
- **JUNG, Yu Ri**
  **Incheon-Si 407-060 (KR)**
- **CHO, Kyung Hee**
  **Incheon-Si 403-783 (KR)**
- **LIM, Eun Ji**
  **Daegu-Si 703-700 (KR)**

(74) Representative: **Kador & Partner**
**Corneliusstraße 15**
**80469 München (DE)**

(56) References cited:
**EP-A1- 0 050 006**
**GB-A- 1 118 730**
**JP-A- H08 238 073**
**JP-A- 2011 004 666**
**JP-B2- 3 400 591**
**JP-B2- 4 385 632**
**KR-A- 20100 101 499**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 759 213 B1

## Description

[Technical Field]

The present invention relates to a technology which substitutes for the use of phosphate which sparks controversy over harmful effects on humans and is used in processes for producing processed meat products (sausage and ham).

[Background Art]

Studies on processed meat products such as sausage have been focused on reducing animal fats or reducing phosphate or table salt in order to prevent obesity accompanied by westernized eating habits presently and adult diseases resulting from obesity.

In commercially available processed meat products, various materials such as phosphates, a hydrocolloid, starch and wheat flour are used in order to adjust the pH and enhance texture. These additive materials enhance texture, moisture retention capacity, flavor and the like of processed meat products.

Phosphate enhances the tenderness and texture by increasing the binding property of the food surimi products with inorganic compounds, brings about harmony of tastes and enhancement in flavors by increasing the water holding capacity and expansibility of food to improve the structure, and prevents spoilage and discoloration. These functional enhancements are caused by transformation of protein structures and extraction of salt-soluble proteins by raising the pH due to addition of phosphate. In particular, phosphate enhances water holding capacity in processed meat products. As the postmortem glycolysis proceeds, the pH of raw meat is decreased, and thus the moisture-holding capacity of myofibrillar proteins is decreased. Therefore, water holding capacity thereof is enhanced by adding phosphate, which may serve to raise the pH, to the processing process. When phosphate is not added, water may not be added as well as quality of a processed meat product deteriorates due to syneresis of raw meat during the production of the product, thereby significantly affecting imparting functionality by other additive materials. However, as described above, phosphate is a harmful ingredient to humans, and therefore, studies have been conducted on development of processed meat products, which restricts the use thereof.

GB 1,118,730 relates to meat products and in particular to a method of producing such products. The method comprises the step of mixing pieces of meat with a water insoluble calcium alginate and containing an alkaline material.

An edible product having a pH between 5 and 8 and having a gelled aqueous phase provided by a mixture of at least one glucomannan and at least one carrageenan is disclosed in EP 0050006.

JP2011-004666 A discloses a method for producing a meat product. The method includes impregnating raw material meat with a solution containing transglutaminase, alkaline material and egg albumen and enables the production of a meat product having favourable hardness and no phosphate salt is used.

A method for manufacturing a meat product is disclosed in KR2010 0101499. The method comprises the steps of manufacturing a mixture by pulverizing raw meat and mixing the pulverized raw meat with guar gum; manufacturing an emulsified material by mixing the cooled mixture, the back fat of a pig, ice, starch, glucose, NaCl, and seasonings; and filling a casing with the emulsified material and smoking the casing.

JP H08 238073 is directed to provide meat processed products excellent in water holding property and binding property without using a phosphoric acid salt. This composition for an edible meat processing comprises (a) 100 pts.wt. at least one additive selected from starch, plant protein, gelatin, albumen, lactose and casein, (b) 10-60 pts.wt. (based on sodium carbonate) one carbonic acid salt selected from sodium carbonate, sodium hydrogencarbonate, potassium carbonate and potassium hydrogencarbonate, (c) 10-30 pts.wt. (based on ascorbic acid) one compound selected from ascorbic acid, sodium ascorbate and potassium ascorbate and (d) 1-20 pts.wt. (based on acetic acid) one compound selected from acetic acid, sodium acetate and potassium acetate.

A method for producing a plain meat product without using a phosphate salt, or with a reduced amount of the phosphate added to the product, is disclosed in JP 4 385632. In this method, meat in a lump is treated with an aqueous solution which contains calcium hydroxide and/or calcium oxide, and trisodium citrate and/or tripotassium citrate, and, if necessary, transglutaminase.

[Detailed Description of the Invention]

[Technical Problem]

The present invention has been made in an effort to provide a substituting means for phosphate, which is a harmful ingredient and is used in processes for producing processed meat products. That is, the present invention has been made in an effort to provide a method for producing a processed meat product in which phosphate is not used.

The present invention has also been made in an effort to provide a processed meat product having no added phosphate, in which water holding capacity is enhanced and qualities such as a syneresis rate and texture are improved, by such a means.

[Technical Solution]

The present invention provides a processed meat product including one or more basic pH control agents selected from the group consisting of sodium hydroxide, sodium carbonate, quick lime and slaked lime in an amount from 0.1 to 1.0 wt% based on a weight of raw meat.

When 0.1 to 1.0 wt% of the basic pH control agent is added to the raw material, the pH of the product is preferably in a range from 6.0 to 8.0.

The processed meat product of the present invention includes a hydrocolloid in an amount from 0.1 to 1.0 wt% based on the weight of the raw meat and the hydrocolloid is a hydroxypropyl methyl cellulose having a methoxy substituent content from 1 to 40 wt% and a hydroxypropoxy substituent content from 1 to 30 wt%.

Preferably, the hydrocolloid is a hydroxypropyl methyl cellulose having a methoxy substituent content from 19 to 32 wt% and a hydroxypropoxy substituent content from 4 to 12 wt% and having a viscosity from 3 to 200,000 cps.

The present invention provides a method for producing a processed meat product, the method including: (1) grinding raw meat; (2) introducing one or more basic pH control agents selected from the group consisting of sodium hydroxide, sodium carbonate, quick lime and slaked lime in an amount from 0.1 to 1.0 wt% based on a weight of the raw meat into the ground raw meat and mixing the mixture; (3) aging the mixed meat; (4) introducing a texture enhancer, fat, water or a preservative into the aged and mixed meat and mixing the mixture; and (5) performing a post treatment.

Preferably, the basic pH control agent may be introduced and mixed together with a hydrocolloid in an amount from 0.1 to 1.0 wt% based on the weight of the raw meat.

As the texture enhancer, hydroxypropyl methyl cellulose (HPMC) is used in an amount from 0.1 to 1.0 wt% based on the weight of the raw meat.

Preferably, the hydroxypropyl methyl cellulose has a methoxy substituent content from 19 to 32 wt% and a hydroxypropoxy substituent content from 4 to 12 wt% and has a viscosity from 3 to 200,000 mPas

[Advantageous Effects]

According to the present invention, it is possible to provide a processed meat product having no added phosphate, in which a phosphate ingredient, which is harmful to humans, is not included, water holding capacity is enhanced, and qualities such as a syneresis rate and texture are improved.

[Brief Description of Drawings]

FIG. 1 is a flowchart illustrating an exemplary embodiment of a method for producing a processed meat product according to the present invention.

[Best Mode]

The present invention provides a processed meat product including a basic pH control agent which substitutes for phosphate, and a method for producing the same.

The processed meat product of the present invention includes one or more basic pH control agents selected from the group consisting of sodium hydroxide, sodium carbonate, quick lime and slaked lime in an amount from 0.1 to 1.0 wt% based on the weight of raw meat.

The basic pH control agent is a basic material which may enhance the pH in processes for producing processed meat products to prevent the leakage of moisture from the raw meat. As the storage period is increased, the pH of raw meat is decreased by glycolysis and muscle proteins become stiff as postmortem rigidity, thereby reducing the initially retained moisture content from about 90% to about 60%. In order to prevent the reduction in moisture, it is possible to reduce the postmortem rigidity and prevent the loss of moisture by raising the pH to separate the actomysin bonds and secure the filament lattice space of proteins. Further, the greater the pH difference is, the higher the solubility of salt-soluble proteins which have crucial effects on the binding capacity of processed meat products, and an increase in pH through the addition of a basic pH control agent leads to an increase in the amount of salt-soluble proteins extracted.

In the present invention, sodium hydroxide, sodium carbonate, quick lime or slaked lime may be used as the basic pH control agent, but the basic pH control agent is not limited thereto. In particular, sodium carbonate, which is used as an exemplary embodiment of the basic pH control agent in the present invention, significantly enhances water holding capacity of the processed meat product as compared to phosphate which has been used in the related art, and

brings about excellent results even in terms of improvements in a syneresis rate and texture.

The basic pH control agent is preferably used in an amount from 0.1 to 1.0 wt% based on the weight of the raw meat. When the basic pH control agent is used in the above-described range, the pH of the product is adjusted to preferably 6.0 to 8.0. When the basic pH control agent is used in an amount less than 0.1 wt%, the pH adjustment is not sufficient to reach a preferred level in processes for producing the product, and escape of moisture from the raw meat occurs. In addition, syneresis and water holding capacity of the produced product are reduced and the mouthfeel deteriorates. On the contrary, when the basic pH control agent is used in an amount more than 1 wt% based on the weight of the raw meat, the pH is raised more than needed and there is a problem in that the product may not be produced.

In the present invention, a hydrocolloid is used together with the basic pH control agent such that the hydrocolloid may serve to assist in the action of the basic pH control agent and further enhance the function thereof. As the hydrocolloid, hydroxypropyl methyl cellulose (HPMC) is used.

In particular, the hydroxypropyl methyl cellulose (HPMC), which is used as the hydrocolloid, is a compound represented by the following Formula 1 and has a structure in which a cellulose as a main chain is substituted with H, $-CH_3$ and $-CH_2CH(CH_3)OH$ as a substituent group R.

[Formula 1]

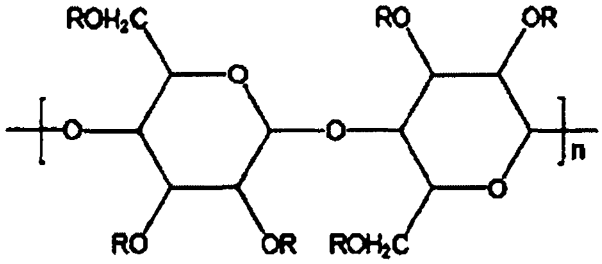

Physicochemical properties of the hydroxypropyl methyl cellulose (HPMC) have a relationship with i) a content of the $-OCH_3$ substituent, ii) a content of the $-OCH_2CH(CH_3)OH$ substituent, and iii) a molecular weight. In the present invention, a hydroxypropyl methyl cellulose having a methoxy substituent content from 19 to 32 wt% and a hydroxypropoxy substituent content from 4 to 12 wt% and having a viscosity from 3 to 200,000 mPas is used.

The term "substituent content" means a ratio of a weight of the corresponding substituent to the total weight of the hydroxypropyl methyl cellulose. Furthermore, the viscosity of the hydroxypropyl methyl cellulose is a viscosity measured using a MCR 301 (heating rate: 2°C/min, spindle No.: CC 27 8009, and RPM (shear rate): 1/s) manufactured by Anton Paar Co., Ltd., and means a viscosity of an aqueous hydroxypropyl methyl cellulose solution having a concentration of 2 wt%.

The hydroxypropyl methyl cellulose having the substituent content and the viscosity reduces the escape of moisture during the processing of meats to a preferred level due to "thermal-gelation". That is, unlike cellulose which is poorly dissolved in water by forming crystals due to strong hydrogen bonding of hydroxyl groups, the hydroxypropyl methyl cellulose exhibits non-ionic properties, has high solubility to water and is well dissolved even at low temperature to form a viscous colloidal solution, and in particular, the hydroxypropyl methyl cellulose exhibits thermal-gelation in which the sol-gel reaction reversibly occurs, unlike other gums or gelatin, which become(s) a solution at high temperature and a gel at low temperature.

Accordingly, when the hydroxypropyl methyl cellulose is used together with a basic pH control agent, the escape of moisture occurring during heating of meat is reduced by the thermal-gelation without disturbing the action thereof, and the water holding capacity of a processed meat product finally produced is enhanced.

In the processed meat product of the present invention, the hydrocolloid also acts as a texture enhancer, and even in this case, hydroxypropyl methyl cellulose acts as a texture enhancer which brings about more enhanced results than other hydrocolloid compounds in terms of hardness and springiness of a product.

In order to optimally enhance the water holding capacity of the processed meat product, the hydrocolloid is used in a range from 0.1 to 1.0 wt% based on the weight of the raw meat. That is, when the hydrocolloid is used in an amount less than 0.1 wt% based on the weight of the raw meat, the water holding capacity thereof is decreased, and on the contrary, when the hydrocolloid is used in an amount more than 1.0 wt% based on the weight of the raw meat, the water holding capacity thereof is increased, but is not much improved as compared to an optimal value. Further, when the hydrocolloid is used in excess, there is a problem in that a large load occurs during the mixing of the mixture, and therefore, the workability deteriorates.

The present invention provides a method for producing a processed meat product, the method including: grinding raw meat; introducing one or more basic pH control agents selected from the group consisting of sodium

hydroxide, sodium carbonate, quick lime and slaked lime in an amount from 0.1 to 1.0 wt% based on the weight of the raw meat into the ground raw meat and mixing the mixture; aging the mixed meat; introducing a texture enhancer, fat, water or a preservative in the aged and mixed meat and mixing the mixture; and finally performing a post treatment.

The basic pH control agent may be introduced together with an auxiliary material, such as table salt and nitrite, which is used in the production of a typical processed meat product. In this case, preferably, table salt and nitrite may be used in an amount from 0.1 to 5 wt% and from 0.01 to 0.03 wt% based on the weight of the raw meat, respectively.

The basic pH control agent assists in extraction of salt-soluble proteins in the aging process subsequently performed, thereby increasing the binding capacity and water holding capacity of the raw meat. In this case, when used together with the basic pH control agent, the hydrocolloid brings about a result of further enhancing the water holding capacity by assisting in the action of the basic pH control agent.

As the hydrocolloid, it is possible to use hydroxypropyl methyl cellulose (HPMC), xanthan gum, alginate, carrageenan gum, locust bean gum, tar gum, guar gum, gellan gum, Arabic gum, pectin or agar.

The aging process, which is conducted after the basic pH control agent is introduced and mixed, or the basic control agent and the hydrocolloid are introduced and mixed together, is performed at a cooling temperature from 0 to 5°C, and the aging time is adjusted depending on the amount of meat, and is preferably 12 to 24 hours. Through the aging process, water holding capacity, binding capacity and flavors are improved.

It is all possible to introduce the hydrocolloid before or after the aging process. That is, the basic pH control agent and the hydrocolloid may be introduced before the aging process, thereby assisting in the action of the basic pH control agent in the aging process, or the hydrocolloid may be separately introduced after the aging process is completed, thereby contributing to enhancing mouthfeel of the product.

It is particularly preferred that the hydroxypropyl methyl cellulose as the hydrocolloid is used in terms of effects of improving the texture of the product. In addition, it is preferred that the hydrocolloid is used in an amount from 0.1 to 1.0 wt% based on the weight of the raw meat, such that the hydrocolloid may assists in the action of the basic pH control agent to advantageously act to enhance the water holding capacity, or brings about a preferred effect on improvement in texture of the product, such as hardness and springiness of the product.

Meanwhile, in the present invention, as the texture enhancer, it is possible to use a material, such as isolated soy protein or whey powder, which is used in the production of a typical processed meat product, in addition to the hydrocolloid. In this case, preferably, the isolated soy protein and the whey powder may be used in a range from 0.5 to 5 wt% and from 0.1 to 1 wt% based on the weight of the raw meat, respectively.

After the aging process, iced water, fat and a preservative are additionally introduced. As the raw meat in the production of the processed meat product of the present invention, pork ham part or back fat typically used in the production of a processed meat product is used. In this case, a ham part is usually used as the raw meat which is mixed with the basic pH control agent in the initial stage of the production process, and back fat may be used as the raw meat which is additionally introduced after the aging process. Furthermore, iced water and a preservative are preferably introduced together with back fat. In this case, iced water is used in an amount from 5 to 20 wt% based on the weight of the raw meat, and as the preservative, sodium lactate may be used in a range from 0.1 to 1 wt% based on the weight of the raw meat. Further, in this step, various spices or food additives may be additionally introduced and mixed.

The post treatment process includes: introducing the mixture into a filling machine and filling a casing with the mixture; heat-drying the filled sausage semi-finished product; and cooling the sausage subjected to the heat-drying treatment. In this case, temperature and time for performing the process in each step follow conditions used in typical processes for producing processed meat products.

As an exemplary embodiment of the process of producing a processed meat product having no added phosphate, the present invention provides a method for producing a sausage having no added phosphate, which is conducted under the following conditions.

(1) Pork ham parts and back fat are repeatedly ground twice with a 6-mm plate using a chopper;
(2) Table salt, nitrite and a basic pH control agent are sequentially introduced into the ground ham part, and the mixture is mixed in a silent cutter for 1 to 10 minutes;
(3) The mixed meat is aged in a refrigerator for 24 hours;

Isolated soy protein, whey powder and a hydrocolloid are sequentially introduced into the aged and mixed meat, and the mixture is mixed in a silent cutter for 1 to 10 minutes;

(5) Ground back fat, iced water and sodium lactate are sequentially introduced into the mixture, and the resulting mixture is mixed in a silent cutter for 1 to 10 minutes;
(6) The mixture is introduced into a filling machine and the PVC casing is filled with the mixture;
(7) The filled sausage semi-finished product is heat-dried in a dryer at 60°C for 60 minutes, and then is heated at 85°C for 120 minutes; and

(8) The production of the sausage having no added phosphate is completed by cooling the sausage subjected to the heating treatment in iced water for 20 minutes.

In process (5), various spices or additives added in the typical production of a sausage may be additionally introduced.

When a process of infiltrating smoke into the mixture using a smoker is additionally included between processes (4) and (5), a unique smoked aroma produced by reaction of phenols and carbonyls with meat proteins is imparted to the sausage, the appetite is whetted, and a shelf life of the sausage may be enhanced due to bacteriostatic action and antioxidant action caused by phenols.

The casing used in process (6) is characterized by being selected from casings required in various sausages and filled. The size and shape of the casing is determined depending on the type of sausage, and both natural casings and artificial casings may be used and are determined depending on the needs of consumers.

Hereinafter, the present invention will be described in more detail through the Examples. These Examples are provided for illustrating the present invention, and the scope of the present invention should not be understood to be limited thereto.

<u>Example 1</u>

[Production of Sausage Having No Added Phosphate]

In order to produce a sausage having no added phosphate according to the present invention, raw meat and auxiliary materials were prepared, and then the sausage was produced according to the processes illustrated in FIG. 1.

Pork ham parts, back fat, iced water, table salt, sodium carbonate, nitrite, isolated soy protein, whey powder, hydroxypropyl methyl cellulose (HPMC) and sodium lactate in the entire raw material of the sausage were used in the amounts as described in the following Table 1. As the HPMC, an HPMC prepared by the method described in Korean Patent Application Laid-Open No. 10-2010-0118800 (Cellulose Ether Derivatives and Method of Preparing Same) was used.

A ground meat was prepared by grinding pork ham parts and back fat with excessive fat tissues removed twice with a 6-mm plate using a chopper [meat chopper (M-12S manufactured by Fujee Industries Co., Ltd.)], and an emulsion was prepared by adding the ham parts, table salt, sodium carbonate and nitrite using a silent cutter (Hobart), and then aged in a refrigerator for 24 hours. A mixture was prepared by adding isolated soy protein, whey powder, and hydroxypropyl methyl cellulose to the aged emulsion, performing mixing in a silent cutter, and then adding additionally ground back fat, iced water and sodium lactate thereto. A L. F. Width 55 mm PVC casing was filled with the mixture thus-prepared using a sausage filling machine. Thereafter, the sausage was dried in a dry oven at 60°C for 1 hour, and then heated at 85°C for 2 hours using a thermostat water bath (DAIHAN Scientific WCR-22). The heated sausage was finally cooled in iced water for 20 minutes.

<u>Example 2</u>

A sausage was produced in the same manner as in Example 1, except that sodium carbonate was used in an amount increased by 50% as compared to the amount used in Example 1.

<u>Example 3</u>

A sausage was produced in the same manner as in Example 1, except that sodium carbonate was used in an amount increased by 100% as compared to the amount used in Example 1.

Reference <u>Example 4</u>

A sausage was produced in the same manner as in Example 3, except that kappa-carrageenan was used instead of hydroxypropyl methyl cellulose.

<u>Comparative Example</u>

A sausage was produced in the same manner as in Example 1, except that in Example 1, phosphate was used instead of sodium carbonate and kappa-carrageenan was used instead of hydroxypropyl methyl cellulose.

Table 1

<table>
<tr><td colspan="3" rowspan="2"></td><td colspan="5">Blending ratio (in batch)</td></tr>
<tr><td>Comparative Example</td><td>Example 1</td><td>Example 2</td><td>Example 3</td><td>Ref. Example 4</td></tr>
<tr><td rowspan="2">Raw meat (g)</td><td colspan="2">Pork ham part</td><td colspan="5">900</td></tr>
<tr><td colspan="2">Pork back fat</td><td colspan="5">100</td></tr>
<tr><td rowspan="10">Auxiliary materials (wt % based on the weight of the raw meat)</td><td colspan="2">Iced water</td><td colspan="5">15</td></tr>
<tr><td colspan="2">Table salt</td><td colspan="5">1</td></tr>
<tr><td colspan="2">Phosphate</td><td>0.3</td><td>-</td><td>-</td><td>-</td><td>-</td></tr>
<tr><td colspan="2">Sodium carbonate</td><td>-</td><td>0.3</td><td>0.45</td><td>0.6</td><td>0.6</td></tr>
<tr><td rowspan="2">Hydrocolloid</td><td>kappa-carrageenan</td><td>0.3</td><td>-</td><td>-</td><td>-</td><td>0.3</td></tr>
<tr><td>HPMC</td><td></td><td>0.3</td><td>0.3</td><td>0.3</td><td></td></tr>
<tr><td colspan="2">Nitrite</td><td colspan="5">0.03</td></tr>
<tr><td colspan="2">Isolated soy protein</td><td colspan="5">1</td></tr>
<tr><td colspan="2">Whey powder</td><td colspan="5">0.4</td></tr>
<tr><td colspan="2">Sodium lactate</td><td colspan="5">0.5</td></tr>
</table>

Experimental Example 1

[Evaluation of Syneresis Rate]

In order to evaluate the synereis of the sausages produced in the Examples and the Comparative Example, samples were left to stand at 20°C for 3 hours. The weights of the sausages were primarily measured, syneresis materials between the sausage casings and the sausages were removed, and then the weights were measured again.

The syneresis rate was derived as in the following equation.

$$\text{Syneresis rate (\%)} = \{(\text{weight of sausage} - \text{weight after syneresis materials are removed}) / \text{weight of sausage}\} \times 100$$

The result of measuring the syneresis rates is shown in the following Table 2.

Table 2

| | Comparative Example | Example 1 | Example 2 | Example 3 | Ref. Example 4 |
|---|---|---|---|---|---|
| Syneresis (%) | 7.60 ± 3.44 | 1.84 ± 1.01 | 0.92 ± 0.86 | 0.52 ± 0.13 | 0.27 ± 0.09 |

All the values are an average ± a standard deviation. From the above Table, it can be confirmed that when the sodium carbonate of the present invention is used as a basic pH control agent, the syneresis rate was significantly reduced as compared to the Comparative Example in which phosphate was used. In addition, as the amount of sodium carbonate added is increased, the syneresis rate is further reduced. Meanwhile, in the case of the hydrocolloid, kappa-carrageenan exhibited a lower syneresis rate than HPMC.

Experimental Example 2

[Evaluation of Water Holding Capacity]

In order to evaluate the water holding capacities of sausages produced in the Examples and the Comparative Example, samples were left to stand at 20°C for 3 hours. After the samples were left to stand on an ADVANTEC 2 90-mm filter paper at 20°C for 3 hours, sausages cut into a 2 cm unit were placed thereon and a 3 kg weight was placed thereon for 5 minutes, and then the total areas on which moisture was dispersed were measured.

In order to evaluate the water holding capacity, an extract-release ratio (ERR) was calculated using the following method.

$$ERR(\%) = \{(Total\ area - Area\ of\ sausage) / Total\ area\} \times 100$$

The results are shown in the following Table 3.

Table 3

| | Comparative Example | Example 1 | Example 2 | Example 3 | Ref. Example 4 |
|---|---|---|---|---|---|
| ERR (%) | 43.50 ± 3.77 | 17.04 ± 1.01 | 11.45 ± 2.33 | 9.15 ± 3.83 | 13.49 ± 0.55 |

All the values are an average ± a standard deviation. According to the ERR measurement results, it can be confirmed that when the sodium carbonate of the present invention was used as a basic pH control agent, water holding capacities were significantly enhanced as compared to the Comparative Example in which phosphate was used. Further, the water holding capacities was further enhanced in proportion to the amount of sodium carbonate used. Meanwhile, in the case of the hydrocolloid, it can be seen that HPMC enhances water holding capacity as compared to kappa-carrageenan.

Experimental Example 3

[Texture Profile Analysis (TPA)]

In order to evaluate the textures of the sausages produced in the Examples and the Comparative Example, samples were left to stand at 20°C for 3 hours.

Sausages were uniformly cut with a height of about 2 cm, and then a TPA was performed using a 5 kg load cell of TAXTplus (Stable Micro Systems).

※ Setting Conditions (TPA Probe and Setting) for Texture Profile Analysis (TPA)
: P75 & Pre-test speed <3 mm/sec>, Test speed <1 mm/sec>, Post-test speed <1 mm/sec>, Target mode <Strain> Strain <20%), Time interval <2 sec>, Trigger type <auto>, Trigger force <10 g>, Break mode <off>, Tare mode <auto>, Acquisition rate <500>, & Parameter <dia. 35 mm/height 20 mm>

The results are shown in the following Table 4.

Table 4

| | Comparative Example | Example 1 | Example 2 | Example 3 | Ref. Example 4 |
|---|---|---|---|---|---|
| Hardness | 4137.23 ± 118.44 | 3152.44 ± 225.64 | 2937.90 ± 195.66 | 2793.13 ± 223.37 | 3376.13 ± 211.36 |
| Springiness | 0.8416 ± 0.002 | 0.854 ± 0.007 | 0.862 ± 0.002 | 0.863 ± 0.005 | 0.857 ± 0.003 |

According to the results of the TPA, it was confirmed that the sausages in which the sodium carbonate of the present invention was used exhibited a decrease in hardness and an increase in springiness as compared to the sausage in Comparative Example. That is, the sausages of the present invention exhibited an improved texture as compared to Comparative Example. In addition, as the amount of sodium carbonate added was increased, further improved texture

was exhibited. Meanwhile, when kappa-carrageenan was added instead of HPMC as the hydrocolloid, springiness was somewhat decreased, but the value was higher than that when HPMC was used in terms of hardness. That is, HPMC has excellent improvement effects in texture as compared to other hydrocolloids.

Experimental Example 4

[pH Measurement]

In order to evaluate the pHs of the sausages produced in the Examples and the Comparative Example, samples were left to stand at 20°C for 3 hours. A mixture of 10 g of sausage and 190 g of purified water was ground using a mixer for 30 seconds, and then the pH was measured. The pH was measured using a pH meter SG3-ELK manufactured by Mettler Toledo Co., Ltd.

Table 5

| | Comparative Example | Example 1 | Example 2 | Example 3 | Ref. Example 4 |
|---|---|---|---|---|---|
| pH | 6.53 ± 0.05 | 7.04 ± 0.04 | 7.47 ± 0.04 | 7.82 ± 0.08 | 7.84 ± 0.17 |

All the values are an average ± a standard deviation.
From the above Table, it can be seen that sodium carbonate, which is used as a basic pH control agent in the present invention, increased the pH of the product somewhat as compared to phosphate in the Comparative Example, and increased the pH of the product by every 0.43 and 0.35, respectively, (Example 1 < Example 2 < Example 3) as the use amount thereof was increased by every 50% gradually.

**Claims**

**1.** A processed meat product comprising:

one or more basic pH control agents selected from the group consisting of sodium hydroxide, sodium carbonate, quick lime and slaked lime in an amount from 0.1 to 1.0 wt% based on a weight of raw meat, wherein a hydrocolloid is included in an amount from 0.1 to 1.0 wt% based on the weight of the raw meat,

**characterized in that** the hydrocolloid is a hydroxypropyl methyl cellulose having a methoxy substituent content from 1 to 40 wt% and a hydroxypropoxy substituent content from 1 to 30 wt%.

**2.** The processed meat product of claim 1, wherein the pH is in a range from 6.0 to 8.0 when the basic pH control agent is added in an amount from 0.1 to 1.0 wt% based on the weight of the raw meat.

**3.** A method for producing a processed meat product, the method comprising:

(1) grinding raw meat;
(2) introducing one or more basic pH control agents selected from the group consisting of sodium hydroxide, sodium carbonate, quick lime and slaked lime in an amount from 0.1 to 1.0 wt% based on the weight of the raw meat into the ground raw meat and mixing the mixture;
(3) aging the mixed meat;
(4) introducing a texture enhancer, fat, water or a preservative into the aged and mixed meat and mixing the mixture; wherein as the texture enhancer, hydroxypropyl methyl cellulose (HPMC) is used in an amount from 0.1 to 1.0 wt% based on the weight of the raw meat, and
(5) performing a post treatment.

**4.** The method of claim 3, wherein the hydroxypropyl methyl cellulose has a methoxy substituent content from 19 to 32 wt% and a hydroxypropoxy substituent content from 4 to 12 wt% and has a viscosity from 3 to 200,000 mPas.

## Patentansprüche

1. Verarbeitetes Fleischprodukt, umfassend:

 ein oder mehrere basische pH-Kontrollmittel, die aus der Gruppe ausgewählt sind, bestehend aus Natriumhydroxid, Natriumcarbonat, Branntkalk und Löschkalk, mit einer Menge von 0,1 bis 1,0 Gew.-%, basierend auf einem Gewicht von Rohfleisch, wobei mit einer Menge von 0,1 bis 1,0 Gew.-%, basierend auf dem Gewicht des Rohfleisches, ein Hydrokolloid umfasst ist,
 **dadurch gekennzeichnet, dass** das Hydrokolloid eine Hydroxypropylmethylcellulose ist, die einen Methoxy-Substituentengehalt von 1 bis 40 Gew.-% und einen Hydroxypropoxy-Substituentengehalt von 1 bis 30 Gew.-% aufweist.

2. Verarbeitetes Fleischprodukt nach Anspruch 1, wobei der pH in einem Bereich von 6,0 bis 8,0 liegt, wenn das basische pH-Kontrollmittel mit einer Menge von 0,1 bis 1,0 Gew.-% zugegeben wird, basierend auf dem Gewicht des Rohfleisches.

3. Verfahren zum Herstellen eines verarbeiteten Fleischprodukts, wobei das Verfahren das Folgende umfasst:

 (1) Zerkleinern des Rohfleisches;
 (2) Einführen von ein oder mehreren basischen pH-Kontrollmitteln, die aus der Gruppe ausgewählt sind, bestehend aus Natriumhydroxid, Natriumcarbonat, Branntkalk und Löschkalk, mit einer Menge von 0,1 bis 1,0 Gew.-%, basierend auf dem Gewicht des Rohfleisches, in das zerkleinerte Rohfleisch und Mischen der Mischung;
 (3) Altern des gemischten Fleisches;
 (4) Einführen von einem Texturverbesserungsmittel, Fett, Wasser oder einem Konservierungsstoff in das gealterte und gemischte Fleisch und Mischen der Mischung; wobei als das Texturverbesserungsmittel Hydroxypropylmethylcellulose (HPMC) mit einer Menge von 0,1 bis 1,0 Gew.-%, basierend auf dem Gewicht des Rohfleisches, verwendet wird, und
 (5) Durchführen einer Nachbehandlung.

4. Verfahren nach Anspruch 3, wobei die Hydroxypropylmethylcellulose einen Methoxy-Substituentengehalt von 19 bis 32 Gew.-% und einen Hydroxy-propoxy-Substituentengehalt von 4 bis 12 Gew.-% aufweist, und sie eine Viskosität von 3 bis 200.000 mPa · s aufweist.

## Revendications

1. Produit de viande transformé comprenant :

 un ou plusieurs agents de régulation de pH basiques choisis dans le groupe constitué par l'hydroxyde de sodium, le carbonate de sodium, la chaux vive et la chaux éteinte en une quantité allant de 0,1 à 1,0 % en poids par rapport au poids de viande crue, dans lequel un hydrocolloïde est inclus en une quantité allant de 0,1 à 1,0 % en poids par rapport au poids de la viande crue,
 **caractérisé en ce que** l'hydrocolloïde est une hydroxypropylméthylcellulose ayant une teneur en substituant méthoxy allant de 1 à 40 % en poids et une teneur en substituant hydroxypropoxy allant de 1 à 30 % en poids.

2. Produit de viande transformé selon la revendication 1, dans lequel le pH est compris dans la plage allant de 6,0 à 8,0 lorsque l'agent de régulation de pH basique est ajouté en une quantité de 0,1 à 1,0 % en poids par rapport au poids de la viande crue.

3. Procédé de production d'un produit de viande transformé, le procédé comprenant :

 (1) le broyage de la viande crue ;
 (2) l'introduction d'un ou de plusieurs agents de régulation de pH basiques choisis dans le groupe constitué par l'hydroxyde de sodium, le carbonate de sodium, la chaux vive et la chaux éteinte en une quantité allant de 0,1 à 1,0 % en poids par rapport au poids de la viande crue, dans la viande crue broyée et le malaxage du mélange ;
 (3) le vieillissement de la viande malaxée ;

(4) l'introduction d'un agent améliorant la texture, d'une matière grasse, d'eau ou d'un conservateur dans la viande vieillie et malaxée, et le malaxage du mélange ; où en tant qu'agent améliorant la texture, de l'hydroxypropylméthylcellulose (HPMC) est utilisée en une quantité de 0,1 à 1,0 % en poids par rapport au poids de la viande crue, et

(5) la réalisation d'un post-traitement.

4. Procédé selon la revendication 3, dans lequel l'hydroxypropylméthylcellulose a une teneur en substituant méthoxy de 19 à 32 % en poids et une teneur en substituant hydroxypropoxy de 4 à 12 % en poids et a une viscosité de 3 à 200 000 mPas.

FIG. 1

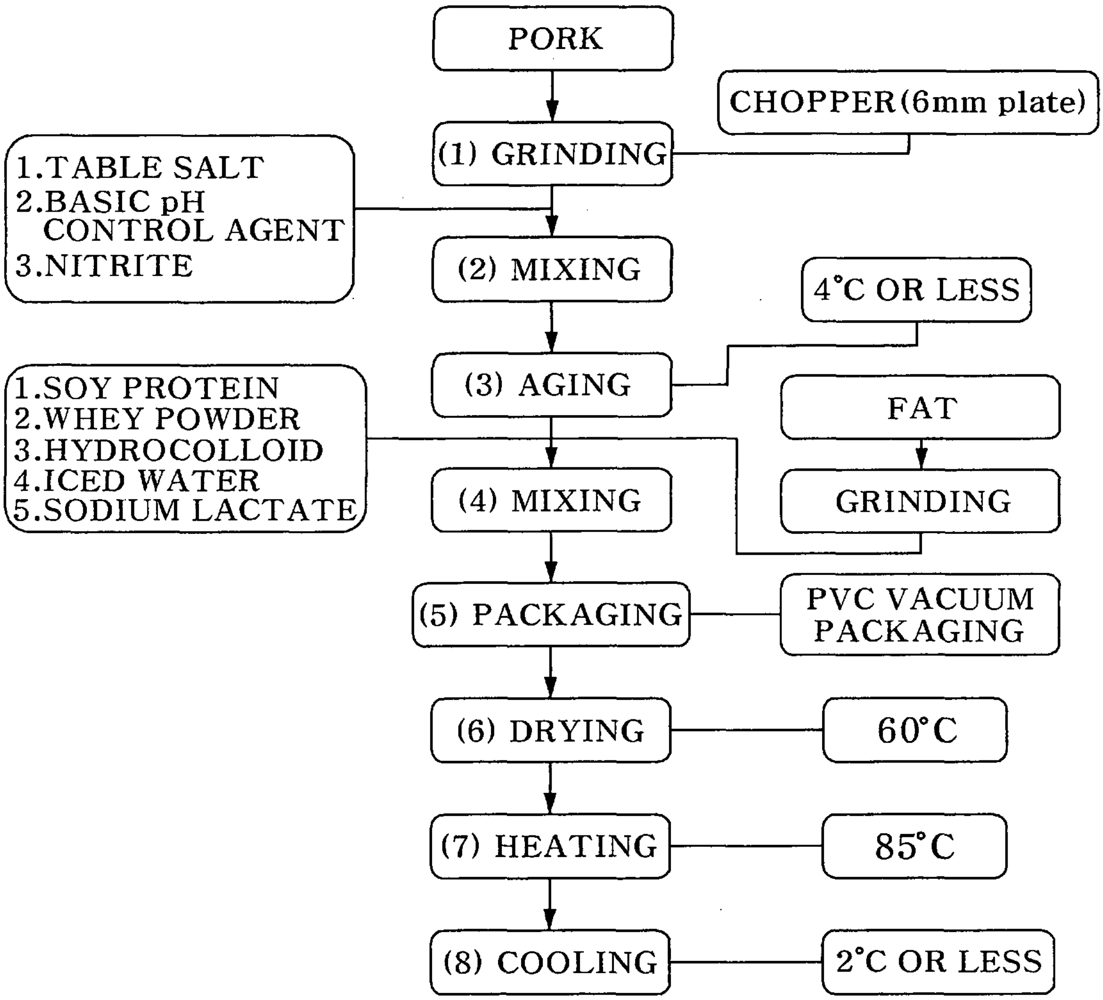
PORK
CHOPPER(6mm plate)
(1) GRINDING
1.TABLE SALT
2.BASIC pH CONTROL AGENT
3.NITRITE
(2) MIXING
4°C OR LESS
(3) AGING
1.SOY PROTEIN
2.WHEY POWDER
3.HYDROCOLLOID
4.ICED WATER
5.SODIUM LACTATE
FAT
(4) MIXING
GRINDING
(5) PACKAGING
PVC VACUUM PACKAGING
(6) DRYING
60°C
(7) HEATING
85°C
(8) COOLING
2°C OR LESS

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 1118730 A
- EP 0050006 A
- JP 2011004666 A
- KR 20100101499
- JP H08238073 B
- JP 4385632 A
- KR 1020100118800